# EUROPÄISCHE PATENTANMELDUNG

(11) **EP 1 579 896 A1**
(43) Veröffentlichungstag der Anmeldung: **28.09.2005**
(21) Anmeldenummer: 05005716.5
(22) Anmeldetag: 16.03.2005
(51) Int. Cl.: A63F 13/12

(54) **Verfahren und Vorrichtung zur Interaktion von Spielkonsolen**

(30) Priorität: 23.03.2004 DE 102004014190
(71) Anmelder: Giesecke & Devrient GmbH, 81677 München (DE)
(72) Erfinder: Finkenzeller, Klaus, 80939 München (DE); Ojster, Albert, 81373 München (DE)

(57) **Zusammenfassung**

Es wird ein Verfahren und Vorrichtungen zur mittelbaren Interaktion von Spielkonsolen (SK; SK1, SK2, SK3, SK3) in einem regionalen Umfeld beschrieben. Dazu ist ein auf einem lokalen Serviceterminal (SA) eines Dienstleitungsanbieters zentralisiertes elektronisches Bewertungsverfahren vorgesehen, daß durchgeführt wird, sobald eine mit einem Spielprogramm (SP; SP1, SP2, SP3) ausgestattete Spielkonsole (SK; SK1, SK2, SK3) in den Nahbereich (NB) des Serviceautomaten (SA) eintritt. Ein von einem Spieler mit dem Spielprogramm (SP; SP1, SP2, SP3) erzieltes Spielergebnis (RES) wird auf den Serviceautomaten (SA) übertragen und dort gegen eine vom Serviceautomaten (SA) zu ermittelnde Anzahl von Werteinheiten (WE) eingetauscht. Die Werteinheiten (WE) können dann an Serviceautomaten (SA) in einen Gegenwert eingetauscht oder auf die Spielkonsole zur dortigen Verbuchung übertragen werden.

## Beschreibung

Die Erfindung betrifft ein Verfahren, einen Serviceautomaten, eine Spielkonsole sowie ein System zur regionalen Interaktion von Spielkonsolen.

Verfahren und Vorrichtungen dieser Art sind bei der Verwendung von Spielkonsolen aller Art sowie in der Werbewirtschaft einsetzbar.

Mit einer elektronischen, portablen Spielkonsole kann ein Spieler viele verschiedene elektronische Spielprogramme ausführen. Das Angebot reicht von einfachsten Arcade- und Reaktionsspielen bis hin zu komplexen Rollenspielen, bei denen der Spieler mit einem virtuellen Charakter als Spielfigur in einer virtuellen Szenerie eine Aufgabe lösen muß.

Dabei sind auch Spielprogramme für portable Spielkonsolen bekannt, bei denen sich zwei oder mehrere Spieler mit ihren Spielkonsolen zu einer lokalen Spielgemeinschaft zusammenfinden und ein kooperatives Spielprogramm gemeinsam vor Ort spielen oder bei einem kompetetiven Spielprogramm gegeneinander antreten. Um den dazu erforderlichen Datentransfer zu realisieren, werden die Spielkonsolen der Spielgemeinschaft durch elektrische Kabelverbindungen in einem lokalen Netzwerk (LAN, Local Area Network) organisiert. Als Spielanreiz werden die erzielten Spielergebnisse (Highscores) der einzelnen Spieler innerhalb der Spielgemeinschaft verglichen und möglicherweise historisch protokolliert.

Ebenso in einem lokalen Umfeld treffen sich Spieler bei sogenannten LAN-Parties, um ein Mehrbenutzer-Spielprogramm auf zu einem LAN zusammengeschlossenen (Personal-) Computern gemeinsam zu spielen. Als globales Pendant dazu können sich Spielgemeinschaften auch im Internet zusammenfinden, um über die globalen Kommunikationsinfrastruktur den notwendigen Datentransfer zu realisieren. Die Spielergebnisse werden dabei auf bestimmten Web-Sites im Internet weltweit veröffentlicht.

In diesem Zusammenhang ist der Einsatz von drahtloser Nahbereichskommunikation beispielweise beim Aufspielen oder Aktualisieren von Spielprogrammen auf Mobiltelefonen bekannt. Dazu bringt der Benutzer sein Mobiltelefon in den Nahbereich eines Computers, der dann neue Spielanwendungen auf das Mobiltelefon drahtlos überträgt.

Es ist die Aufgabe der vorliegenden Erfindung, eine neuartige, regionale Interaktionsform von Spielkonsolen vorzuschlagen.

Diese Aufgabe wird erfindungsgemäß durch ein Verfahren, einen Serviceautomaten, eine Spielkonsole und ein System mit den Merkmalen der unabhängigen Ansprüche gelöst. In davon abhängigen Ansprüchen sind vorteilhafte Ausgestaltungen und Weiterbildungen der Erfindung angegeben.

Erfindungsgemäß ist ein zentralisiertes, elektronisches Bewertungsverfahren vorgesehen, daß von einem stationären Serviceautomaten eines Dienstleitungsanbieters durchgeführt wird, sobald eine Person mit einer Spielkonsole in den Nahbereich des Serviceautomaten eintritt. Zur Kommunikation zwischen dem Serviceautomaten und der Spielkonsole umfassen beide Geräte jeweils zueinander kompatible Nahbereichskommunikationseinrichtungen, über die drahtlos Daten ausgetauscht werden können, sobald sich die Geräte innerhalb eines bestimmten Nahbereichs zueinander befinden.

Dieser drahtlose Datentransfer kann bei der NFC-Technologie (Near-Field Communication) vorteilhaft über magnetische Felder realisiert werden. Zur drahtlosen Nahbereichskommunikation geeignete alternative Verfahren sind z.B. die Datenübertragung mittels Infrarot-Schnittstellen (IRED), Bluetooth oder WLAN-Technologien (Wireless Local Area Network).

Als portable Spielkonsolen sind im Sinne der Erfindung verschiedene Geräte einsetzbar, z.B. Playstation- oder Gameboy-Konsolen, Tamagochies, entsprechend ausgestattete Laptops und Notebooks, Mobiltelefone mit Spielanwendungen sowie prinzipiell alle mit einer Spielfunktionalität ausgestatteten Telekommunikations-Endgeräte.

Das sich auf der portablen Spielkonsole befindende Spielprogramm, wird von einem Prozessor der Spielkonsole ausgeführt und über eine Bedieneinrichtung der Spielkonsole (z.B. Tastatur, Joystick, etc.) vom Spieler gesteuert. Die aktuelle Spielsituation bzw. begleitende Spielinformation wird dabei von einer (audio-) visuellen Anzeigeeinrichtung der Spielkonsole angezeigt (z.B. LCD-Display, Monitor, etc.).

Ein von einem Spieler mit einem derartigen Spielprogramm zu erzielendes Spielergebnis kann beispielsweise in der Lösung eines Rätsels oder dem Erreichen einer Punktzahl bestehen. Das Spielergebnis wird dann durch Interaktion zwischen der Spielkonsole und dem Serviceautomaten zentral gegen eine vom Serviceautomaten zu ermittelnde Anzahl von Werteinheiten eingetauscht. Dies geschieht, indem die portable elektronische Spielkonsole zunächst von ihrem Benutzer in den Nahbereich des Serviceautomaten eingebracht wird. Die Spielkonsole transferiert sodann das Spielergebnis mittels drahtloser Nahbereichsübertragung auf den Serviceautomaten, wo eine dem Spielergebnis entsprechende Menge von Werteinheiten von einer Bewertungseinrichtung des Serviceautomaten ermittelt wird.

Der Vorteil der Erfindung liegt darin, daß die zentrale Bewertung und Vergütung von Spielergebnissen durch den Serviceautomaten eine mittelbare Interaktion zwischen Spielkonsolen in einem regionalen Umfeld erlaubt, die einen neuartigen regionalen Wettbewerb der Spielkonsolen ermöglicht. Dabei wird ein Spielergebnis für den jeweiligen Spieler komfortabel und ohne weiteren Aufwand von dem Serviceautomaten in Werteinheiten umgerechnet. Für den Dienstleistungsanbieter als Betreiber des Serviceautomaten ergibt sich daraus wiederum der Vorteil, daß Spieler zum Eintausch von Spielergebnissen an einen zentralen - idealerweise in einem Verkaufsraum aufgestellten - Serviceautomaten herantreten. Dadurch können den in der entsprechenden Region befindlichen Spielern die Waren und Dienstleistungen des Betreibers gezielt angeboten bzw. diese beworben werden.

Nachdem der Serviceautomat die einem Spielergebnis entsprechenden Werteinheiten durch seine Bewertungseinrichtung ermittelt hat, kann entweder eine Bereitstellungseinrichtung des Serviceautomaten dem Spieler direkt einen den Werteinheiten zugeordneten Gegenwert bereitstellen oder die Werteinheiten können zunächst mittels der Nahbereichskommunikationseinrichtung drahtlos an die Spielkonsole zur dortigen Verbuchung übertragen werden.

Bei dem bereitzustellenden Gegenwert kann es sich beispielsweise um Softwarekomponenten handeln, insbesondere um neue Spielprogramme, Varianten von Spielprogrammen, Rätsel, Spielstufen, Spielszenen, Spielsituationen oder virtuelle Spielfiguren oder Charaktere. Diese Gegenwert-Spielprogramme werden über die Nahbereichskommunikationseinrichtung des Serviceautomaten drahtlos an die Spielkonsole zur dortigen Ausführung übertragen.

Alternativ kann es sich bei dem Gegenwert auch um materielle Gegenstände handeln, beispielsweise um beliebte Konsumgüter, Werbeartikel oder auch um Bargeld. In diesem Fall umfaßt der Serviceautomat eine Ausgabeeinrichtung, um die Gegenstände dem Spieler unmittelbar aushändigen zu können. Falls es sich in einer weiteren Alternative bei den Gegenwerten um Waren- oder Geldgutscheine handelt, umfaßt der Serviceautomat einen Drucker, mit dem die Gutscheine ausgedruckt und dem Spieler ausgehändigt werden.

Ebenso ist es möglich, daß das Bereitstellen des Gegenwertes durch die Gutschrift eines Geldbetrages auf einem Konto des Spielers mittels eines Zahlungsverkehrsterminals (bzw. POS-Modul; Point-Of-Sale) durchgeführt wird. Dazu überträgt das Zahlungsverkehrsterminal des Serviceautomaten entweder über die Nahbereichskommunikationseinrichtung oder eine andere dazu geeignete drahtlose Verbindung (z.B. GMS, WAP, UMTS, W-LAN, Bluetooth, IRED, NFC, etc.) die entsprechende Wertinformation an die Spielkonsole, wo die geldwerte Gutschrift von einer dort vorhandenen elektronischen Börse verbucht wird. Dazu ist die Spielkonsole entweder permanent oder austauschbar mit einer elektronischen Kontoeinrichtung ausgestattet, die die Konto- und/oder Wertinformation besitzt. Hierfür eignen sich insbesondere Geldkarten, Chipkarten, Kreditkarten oder auch SIM-Karten, die die Verwendung eines Mobilfunkkontos ermöglichen. Ebensogut kann die Gutschrift durch Übertragen der Wertinformation an eine kontoführende dritte Stelle, z.B. ein Finanzinstitut gutgeschrieben werden.

Die von der Bewertungseinrichtung des Serviceautomaten ermittelten Werteinheiten können bei einer Ausgestaltung der Erfindung - vor dem Eintausch gegen einen Gegenwert - zunächst drahtlos über die Nahbereichskommunikationseinrichtungen auf die Spielkonsole übertragen und dort angesammelt werden, um sie später in einen wertvolleren Gegenwert eintauschen zu können. Hierzu umfaßt eine vorteilhaft ausgestaltete Spielkonsole eine Werteinheitenverwaltung zum Verwalten und Verbuchen der Werteinheiten.

Zum Eintauschen eines Teils der verbuchten Werteinheiten in einen Gegenwert, wird die entsprechende Anzahl von Werteinheiten von der Werteinheitenverwaltung ausgebucht und an den Serviceautomaten übertragen. Der entsprechende Gegenwert (z.B. Spielprogramme, Waren, Gutscheine oder Geldgutschriften) wird anschließend von einer Bereitstellungseinrichtung (z.B. Ausgabe, Drucker, elektronische Überweisung) des Serviceautomaten bereitgestellt wird.

Bei einer vorteilhaften Ausgestaltung der Erfindung umfaßt die Spielkonsole eine Signatureinrichtung, um das Spielergebnis vor einer drahtlosen Nahbereichsübertragung mit einer reproduzierbaren Signatur zu individualisieren. Die Signatur wird mit einem eindeutig der signierenden Spielkonsole zugeordneten Signaturschlüssel durch Verschlüsseln des Spielergebnisses mit dem Signaturschlüssel erzeugt, so daß die Spielkonsole, mit der das Spielergebnis erzielt wurde bzw. der Spieler der es erzielt hat, eindeutig bestimmbar ist.

Zum Signieren besitzt die Spielkonsole einen individuellen Signaturschlüssel, der vorzugsweise auf der Spielkonsole geheim aufbewahrt wird. Dabei ist es vorteilhaft hierfür einen speziellen Signaturschlüsselspeicher vorzusehen, der den Signaturschlüssel sicher und manipulationsgeschützt aufbewahrt. Dieser Speicher muß nicht notwendigerweise als permanente Komponente der Spielkonsole realisiert sein, sondern kann auch auf einem portablen Medium bereitgestellt werden, beispielsweise auf einer PIN- oder passwortgeschützten Chipkarte oder einer SIM-Karte. Mit derartigen Chipkarten kann als zusätzliches Sicherheitsmerkmal eine Zugangskontrolle eines Spielers zu der Spielkonsole realisiert werden, um diese vor Fremdzugriff zu schützen.

Nach der Übertragung des eindeutig signierten Spielergebnisses verifiziert der Serviceautomat mit einer dafür vorgesehenen Verifikationseinrichtung die Signatur. Dies geschieht üblicherweise durch das Entschüsseln der Signatur mit einem dem Signaturschlüssel der Spielkonsole entsprechenden weiteren Signaturschlüssel, so daß das Spielergebnis und die darüber hinaus relevanten Informationen (z.B. Spieltyp, Spieler, etc.) im Klartext auf dem Serviceautomaten vorliegen.

Der Vorteil des Signierens liegt darin, daß die Manipulation von übertragenen Daten ausgeschlossen werden kann und sich ein nicht berechtigter Spieler ein von einem berechtigen Spieler erzieltes Spielergebnis nicht zu eigen machen.

Um weitere Interaktions- und Wettbewerbsmöglichkeiten zu schaffen, umfaßt eine vorteilhafte Ausgestaltung des Serviceautomaten ferner eine Ergebnisverwaltung zum Speichern und zum Verwalten der dem Serviceautomaten übertragenen Spielergebnisse und Spielernamen. Die Ergebnisverwaltung kann Ranglisten der erzielten Spielergebnisse nach unterschiedlichen Kriterien aufstellen, z.B. sortiert nach Einzelergebnissen, Gesamtergebnissen, Gruppenergebnissen, nach Regionen, oder nach statistischen Kriterien oder Spieltypen etc. Die Spieler, die besonders gute Spielergebnisse erzielt haben, können anhand der eindeutigen Signatur ihrer Spielergebnisse ermittelt und zusätzlich mit Werteinheiten prämiert werden. Diese Werteinheiten werden dann automatisch auf die Spielkonsolen dieser Spieler übertragen, wenn sie ihre Spielkonsole das nächste mal in den Nahbereich des Serviceautomaten einbringen.

Desweiteren umfaßt der Serviceautomat bei dieser Ausgestaltung eine Anzeigeeinrichtung zum öffentlichen Anzeigen der verwalteten Spielergebnisse und Ranglisten sowie der Klarnamen oder "Nicknames" (Spitznamen) der Spieler, die diese Spielergebnisse erzielt haben. Die Spieler können ihre Ergebnisse am Serviceterminal kontrollieren und sich über die Spielergebnisse anderer Spieler informieren.

Bei einer bevorzugten Ausführungsform der vorliegenden Erfindung umfaßt die Spielkonsole einen Spieleditor, mit dessen Hilfe ein Spieler neue Spielprogramme oder Varianten existierender Spielprogramme, Spielstufen, virtuelle Charakteren oder Spielszenen entwerfen kann. Ein solcherart entwickeltes oder variiertes Spielprogramm wird mit einem auf den Urheber dieses Urheber-Spielprogramms hinweisenden Urheberhinweis versehen.

Zur Verbreitung eines so entwickelten Urheber-Spielprogramms kann eine Spielkonsole über ihre Nahbereichskommunikationseinrichtung einen Datentransfer zu einer weiteren Spielkonsole aufbauen, um dieser das auf der Spielkonsole entwickelte Urheber-Spielprogramm drahtlos im Nahbereich zu übertragen. Das Urheber-Spielprogramm kann auf denjenigen Spielkonsolen auf die es übertragen wurde, von einem Spieler uneingeschränkt ausgeführt werden, so daß ein Spieler mit einem von einem anderen Spieler entwickelten Urheber-Spielprogramm eigene Spielergebnisse erzielt.

Falls eine Spielkonsole, auf der ein Spielergebnis mit einem Urheber-Spielprogramm von einem Spieler erzielt wurde, der nicht der Urheber des Urheber-Spielprogramms ist, in den Nahbereich des Serviceautomaten gebracht wird, wird dieses Spielergebnis zusammen mit dem Urheberhinweis drahtlos an den Serviceautomaten zum Eintausch gegen Werteinheiten übertragen. Bei der Ermittlung von Werteinheiten durch die Bewertungseinrichtung des Serviceautomaten, wird nun nicht nur dem Spieler, der das Spielergebnis erzielt hat eine angemessene Menge von Werteinheiten gutgeschrieben, sondern es wird auch der Urheber für seine Urheberschaft belohnt, indem auch ihm Werteinheiten zugeschrieben werden. Darüber hinaus kann auch die Urheberschaft von der Ergebnisverwaltung des Serviceautomaten verwaltet und von der Anzeigeeinrichtung des Serviceautomaten angezeigt werden.

Die Werteinheiten des Spielers des Urheber-Spielprogramms können unmittelbar von dem Serviceautomaten auf dessen Spielkonsole drahtlos übertragen werden, da diese sich noch im Nahbereich des Serviceautomaten befindet. Die Werteinheiten des Urhebers - die Urheber-Werteinheiten - werden jedoch erst dann gutgeschrieben, wenn der Urheber seine Spielkonsole das nächste Mal in den Nahbereich des Serviceautomaten einbringt.

In einer weiteren Ausgestaltung der Erfindung ist es einer Spielkonsole möglich, ein auf ihr entwickeltes Urheber-Spielprogramm nicht nur an weitere Spielkonsolen, sondern auch an den Serviceautomaten zu übertragen. Dieser kann dann ein ihm zur Verfügung gestelltes, besonders erfolgreiches Urheber-Spielprogramm weiteren Spielern als Gegenwert-Spielprogramm anbieten. Das Weiterverbreiten eines erfolgreichen Urheber-Spielprogramms durch den Serviceautomaten führt insofern zu einer weiteren Anerkennung eines Urhebers durch andere Spieler.

Da auf diese Weise nicht nur die Spieler sondern auch die Urheber erfolgreicher Spielprogramme prämiert werden, kann die Bindung eines Spielers bzw. eines Urhebers an den Serviceautomaten und damit an den Dienstleistungsanbieter weiter erhöht werden. Diese technische Maßnahme führt zu besseren Werbeeffekten und kommerziellen Vorteilen für den Dienstleistungsanbieter.

Bei einer vorteilhaften Ausgestaltung der vorliegenden Erfindung können nicht nur Urheber-Spielprogramme von der Spielkonsole des Urhebers auf eine weitere Spielkonsole übertragen werden, sondern es ist auch möglich - Spielprogramme, insbesondere Gegenwert-Spielprogramme, gegenseitig auszutauschen. Da ein Spieler für den Erhalt eines Gegenwert-Spielprogramms eine bestimmte Anzahl von Werteinheiten eingetauscht hat, haben Gegenwert-Spielprogramme für einen Spieler einen bestimmten Wert. Um diese Werthaltigkeit zu erhalten ist es vorteilhaft, eine echte Tauschfunktion vorzusehen, so daß ein Spielprogramm, das im Tausch gegen ein anderes Spielprogramm auf eine weitere Spielkonsole übertragen wurde, von der Spielkonsole gelöscht wird, z.B. durch eine Steuereinrichtung.

Bei einer Ausgestaltung der Erfindung umfassen die Spielkonsole sowie der Serviceautomat jeweils kompatible Sicherheitseinrichtungen zum Verschlüsseln von zu versendenden Daten und zum Entschlüsseln von empfangenen Daten. Dadurch kann beispielsweise die Übertragung von Werteinheiten oder Spielprogrammen gegen Manipulation gesichert werden.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Figuren. Darin zeigen:
- Figur 1: ein Ausführungsbeispiel des von einem Serviceautomaten und einer Spielkonsole realisierten erfindungsgemäßen Verfahrens und
- Figur 2: die Interaktion und den Datenfluß zwischen einem Serviceautomaten und mehrere Spielkonsolen.

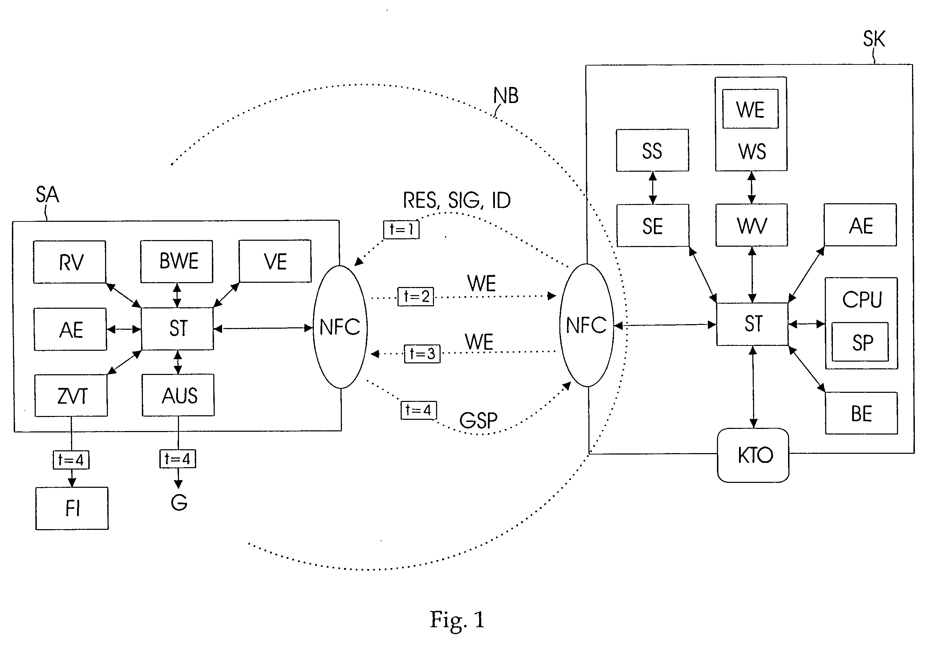

Figur 1 zeigt einen Serviceautomaten SA, in dessen durch die Nahbereichskommunikationseinrichtung NFC des Serviceautomaten SA definierten Nahbereich NB sich eine mit einer kompatiblen Nahbereichskommunikationseinrichtung NFC ausgestattete Spielkonsole SK befindet. Über ihre jeweiligen Nahbereichskommunikationseinrichtung NFC kommunizieren die beiden Geräte und realisieren dadurch eine bevorzugte Ausführungsform des erfindungsgemäßen Verfahrens in vier Schritten t=1 bis t=4.

Als Nahbereichskommunikationseinrichtung NFC kann besonders vorteilhaft die NFC-Technologie (Near Field Communication) eingesetzt werden, die Daten mittels magnetischer Felder im Frequenzband 13,56 MHz in einem Radius von typischerweise 20 cm überträgt. Die magnetische Feldstärke eines NFC-Geräts ist in der NFC-Spezifikation ECMA-340 (NFCIP-1) angegeben und beträgt mindestens 1,5 A/ m, sowie maximal 7,5 A/ m bei einer Sendefrequenz von 13,56 MHz. Alternative zur drahtlosen Nahbereichskommunikation geeignete Verfahren sind die Datenübertragung mittels kommunizierender Infrarot-Schnittstellen (IRED), Bluetooth- oder WLAN-Technologien (Wireless Local Area Network) oder auch jede beliebige sonstige zur drahtlosen Nahbereichskommunikation geeignete Technologie.

Der Serviceautomat SA umfaßt eine zentrale Steuereinheit ST, die sämtliche Funktionen des Serviceautomaten SA und insbesondere den Datenaustausch mit der Spielkonsole SK steuert. Neben der Nahbereichskommunikationseinrichtung NFC umfaßt der Serviceautomat SA desweiteren eine Bewertungseinrichtung BWE zur Bewertung eines Spielergebnisses RES, eine Verifikationseinrichtung VE zur Verifikation/Entschlüsselung einer Signatur SIG, eine Ergebnisverwaltung RV, eine Anzeigeeinrichtung AE, ein Zahlungsverkehrsterminal ZVT und eine Ausgabeeinrichtung AUS. Die meisten dieser Komponenten, insbesondere die Bewertungseinrichtung BWE, die Ergebnisverwaltung RV und die Steuereinrichtung ST können vorteilhaft als Softwaremodule realisiert werden, die auf einem Prozessor ablaufen. Dabei übernimmt die Steuereinrichtung ST die Funktion eines Betriebssystems des Serviceautomaten SA.

Die Spielkonsole SK umfaßt ebenfalls eine zentrale Steuereinrichtung ST. Zur Interaktion eines Spielers mit der Spielkonsole SK umfaßt sie ferner eine Bedieneinrichtung BE (z.B. Tastatur, Trackball, Touchscreen, Joystick,etc.) sowie eine Anzeigeeinrichtung AE, z.B. ein LCD-Display oder einen sonstigen Bildschirm. Desweiteren umfaßt die Spielkonsole SK eine Werteinheitenverwaltung WV mit nachgeschaltetem oder integriertem Werteinheitenspeicher WS, eine Signatureinrichtung SE mit nachgeschaltetem oder integriertem Signaturschlüsselspeicher SS sowie eine Kontoeinrichtung KTO. Die für die Erfindung zentrale Funktionalität der Spielkonsole SK wird jedoch von dem Spielprogramm SP bestimmt, das durch den Prozessor CPU der Spielkonsole SK ausgeführt wird und das ein Besitzer der Spielkonsole SK zum Spielen benutzt.

Auch bei der Spielkonsole können verschiedene Komponenten als Software realisiert werden, z.B. die Werteinheitenverwaltung WV mit Werteinheitenspeicher WS und die Signatureinrichtung SE mit Signaturschlüsselspeicher SS, und von der Steuereinrichtung ST als Betriebssystem der Spielkonsole SK auf dem Prozessor CPU ausgeführt werden. Die Kontoeinrichtung KTO kann ebenfalls Softwareanteile umfassen, wird in der Regel jedoch als sicherer Speicherchip realisiert, z.B. in Form einer integrierten oder separaten Geldkarte, SIM-Karte oder Chipkarte. Insbesondere das Spielprogramm SP stellt eine Softwarekomponente dar, z.B. ein Arcade- oder Rollenspiel, das über die Bedieneinrichtung BE und die Ausgabeeinrichtung AE von einem Spieler gesteuert wird.

Ein Spieler, der das Spielprogramm SP benutzt und mit ihm ein bestimmtes Spielergebnis RES erzielt (z.B. ein Rätsel oder eine Schachaufgabe löst oder eine bestimmte Spielstufe/Level oder Punktszahl erreicht), kann die Spielkonsole SK in den Nahbereich NB des Serviceautomaten SA einbringen und die Kommunikationsverbindung zwischen Serviceautomat SA und Spielkonsole SK herstellen, um das Spielergebnis RES gegen Werteinheiten WE einzutauschen. Je nach Art des verwendeten Kommunikationsprotokolls wird entweder die Spielkonsole SK von dem Serviceautomaten SA detektiert und zur Übertragung der aktuellen Spielergebnisse RES aufgefordert, oder die Spielkonsole SK detektiert umgekehrt den Serviceautomaten SA und überträgt das aktuelle Spielergebnis RES spontan.

Zum sicheren Übertragen des Spielergebnisses RES und zur Authentisierung der Spielkonsole SK gegenüber dem Serviceautomat SA veranlaßt die Steuereinrichtung ST die Generierung einer individuellen Signatur SIG durch die Signatureinrichtung SE, in Abhängigkeit des Spielergebnisses RES und/ oder der Spielkonsole SK und/ oder weiterer reproduzierbarer Parameter wie dem Namen oder einer Kennung des Spielers.

Dazu wird das Spielergebnis RES von der Signatureinrichtung SE mittels eines individuellen Signaturschlüssels verschlüsselt, der auf der Spielkonsole SK manipulationssicher aufbewahrt wird. Dabei ist es vorteilhaft, daß sich ein Spieler mit einer PIN oder einem Kennwort authentisieren muß, bevor er den Signaturschlüssel zum Signieren verwenden kann. Als Signaturschlüsselspeicher SS bieten sich spezielle sichere Speicher an, beispielsweise auch eine aus der Spielkonsole entnehmbare SIM-Karte.

Durch die Verwendung des geheimen Signaturschlüssels kann von einer signierten Nachricht eindeutig auf die Spielkonsole SK als Sender der Nachricht zurück geschlossen werden. Es kann also ein signiertes Spielergebnis RES eindeutig der Spielkonsole SK und somit dem Spieler zugeordnet werden, der das Spielergebnis RES erzielt hat.

Neben dem Spielergebnis RES und der kryptographischen Signatur SIG wird im Schritt t=1 ein Klarname ID bzw. ein "Nickname" (Spitzname) des Spielers, der das Spielergebnis RES erzielt hat, an den Serviceautomaten SA versandt. Durch die Integration des Klarnamens ID oder "Nickname" in die Signatur SIG, kann der Spieler nicht nur elektronisch, sondern auch von weiteren Spielern identifiziert werden kann. Natürlich kann der Klarname ID auch unverschlüsselt zusammen mit dem Spielergebnis an den Serviceautomaten SA übertragen werden. Alternativ ist es auch möglich, nur die Signatur SIG zu übertragen, da sie alle für die Auswertung und Prämierung des Spielergebnisses RES relevanten Informationen verschlüsselt enthält.

Die Steuereinrichtung ST des Serviceautomaten SA empfängt im Wege des drahtlosen Nahbereichsempfangs über seine Nahbereichskommunikationseinrichtung NFC im Schritt t=1 das Spielergebnis RES, die Signatur SIG und den Klarnamen ID von der Spielkonsole SK. Daraufhin wird zunächst die Signatur SIG von der Verifikationseinrichtung VE überprüft, indem die Signatur SIG mit einem zu dem auf der Spielkonsole SK gespeicherten privaten Signaturschlüssel korrespondierenden öffentlichen Signaturschlüssel entschlüsselt wird. Falls die entschlüsselte Signatur SIG mit dem Spielergebnis RES und gegebenenfalls mit dem Klarnamen ID übereinstimmt, gilt die versendende Spielkonsole SK als korrekt authentisiert und es ist sichergestellt, daß das Spielergebnis RES tatsächlich von dem Spieler mit dem Klarnamen ID erzielt wurde.

Als zum Signieren geeignete Verfahren haben sich asymmetrische Signaturverfahren erwiesen (z.B. RSA/PGP), wobei der private Schlüssel in einem sicheren Signaturschlüsselspeicher SS auf der Spielkonsole SK zu speichern ist. Der korrespondierende öffentliche Schlüssel kann bei einem Anmeldeprozeß der Spielkonsole SK an dem Serviceautomaten SA erzeugt und in einem entsprechenden Schlüsselspeicher des Serviceautomaten SA hinterlegt werden. Auch ist es möglich, das der Serviceautomat SA öffentliche Schlüssel von einem Schlüssel-Server im Internet oder einer proprietären Datenbank abruft. Alternativ können auch symmetrische Signaturverfahren (z.B. DES, IDEA) bei Bereitstellung der entsprechenden Infrastruktur verwendet werden.

Für das Spielergebnis RES wird nun von der Bewertungseinrichtung BWE des Serviceautomaten SA eine bestimmte Anzahl von Werteinheiten WE entsprechend der Güte und Qualität des Spielergebnisses RES ermittelt. Die Anzahl der dem Spielergebnis zuzuordnenden Werteinheiten WE kann hierbei in Abhängigkeit von verschiedenen Parametern bestimmt werden, zum Beispiel von der Art und dem Schwierigkeitsgrad des elektronischen Spielprogramms SP, mit dem das Spielergebnis RES erzielt wurde, von der Höhe des Spielergebnisses RES oder auch in Relation zu einem Durchschnitts-Spielergebnis.

Desweiteren prüft die Ergebnisverwaltung RV die Güte des Spielergebnisses RES in Relation zu allen anderen ihr bekannten Spielergebnisse und reiht es zusammen mit dem Klarnamen ID in verschiedene von ihr verwaltete Ranglisten ein, die die Spielergebnisse RES zusammen mit den Klarnamen ID nach unterschiedlichen Kriterien sortieren. Die aktualisierten Ranglisten können dann vorteilhaft auf der Anzeigeeinrichtung AE des Serviceautomaten SA veröffentlicht werden, so daß sich jeder Spieler über die Spielergebnisse RES anderer Spieler informieren kann.

Im Schritt t=2 werden die von der Bewertungseinrichtung BEW ermittelten Werteinheiten WE des Spielergebnis RES über die Nahbereichskommunikationseinrichtung NFC an die Spielkonsole SK übertragen. Dort registriert die Werteinheitenverwaltung WV der Spielkonsole SK die empfangenen Werteinheiten WE und verbucht sie im Werteinheitsspeicher WS. Hierbei ist die Verwendung verschiedener Arten von Werteinheiten WE vorstellbar, die dann getrennt im Werteinheitenspeicher WS gespeichert werden. Auf diese Weise kann ein Dienstleistungsanbieter individuelle und anbieterbezogene Werteinheiten WE an Spieler ausgeben, die nur über einen Serviceautomaten SA dieses Dienstleistungsanbieter eingelöst werden können. Ein derartiger Werteinheitenspeicher WS kann beispielsweise durch Register oder als sicherer Speicherchip realisiert werden.

Bei einer vorteilhaften Ausgestaltung einer erfindungsgemäßen Spielkonsole SK werden alle drei verschiedenen Speichereinrichtungen der Spielkonsole SK, nämlich der Signaturschlüsselspeicher SS, das elektronische Konto KTO und der Werteinheitenspeicher WS, durch ein gemeinsames, sicheres Speichermedium realisiert. Hierzu bieten sich insbesondere SIM-Karten an, die durch eine zusätzliche persönliche Authentisierung, z.B. mittels einer PIN oder auch biometrisch, ein zusätzliches Sicherheitsmerkmal aufweisen.

Die Werteinheiten WE repräsentieren eine virtuelle Währung, die, falls die Werteinheitenverwaltung WV der Spielkonsole SK eine ausreichende Menge von Werteinheiten WE vorhält, am Serviceautomaten SA gegen Gegenwerte eingetauscht werden können. Dabei wird die Werteinheitenverwaltung WV vorzugsweise als Software auf einem manipulationsgeschützten Speicherchip mit Prozessor realisiert, beispielsweise einer sicheren SmartCard, einer SIM-Karte oder einer sonstigen elektronischen Kontofunktionalität. Es ist darüber hinaus vorteilhaft, daß die Anzahl der von der Werteinheitenverwaltung WV verbuchten Werteinheiten WE dem Spieler auf der Anzeigeneinrichtung AE der Spielkonsole SK mitgeteilt wird.

Falls der Spieler eine bestimmte Anzahl von Werteinheiten WE gegen einen bestimmten Gegenwert eintauschen möchte, kann er die Steuereinrichtung ST der Spielkonsole SK über die Bedieneinrichtung BE und die Anzeigeeinrichtung AE (in der Regel eine Tastatur und ein Display) anweisen, die Gesamtzahl der verbuchten Werteinheiten WE um die entsprechende Anzahl von Werteinheiten WE zu reduzieren und die reduzierten Werteinheiten WE im Schritt t=3 drahtlos an den Serviceautomaten SA zu übertragen.

Der Spieler kann sich vorzugsweise am Serviceautomaten SA über die angebotenen Gegenwerte informieren und über die Anzahl der Werteinheiten WE, die für diese Gegenwerte aufgebracht werden müssen. Nach der Übertragung der in einen Gegenwert einzutauschenden Werteinheiten WE auf den Serviceautomaten SA wird der entsprechende Gegenwert von der Steuereinrichtung ST ausgewählt und dem Spieler bereitgestellt. Alternativ ist es auch möglich, daß der Spieler den Gegenwert über ein Bedienelement oder eine interaktive Anzeige (beides nicht abgebildet) direkt am Serviceautomaten SA aus einer Auswahl von verschiedenen Gegenwerten auswählt.

Prinzipiell können die Gegenwerte von unterschiedlicher Art sein. Es ist zunächst möglich, daß als Gegenwert ein Gegenstand G oder ein Gutschein G ist, z.B. ein Produkt oder ein Warengutschein für ein Produkt des Dienstleistungsanbieters. Der Gegenstand G wird im Schritt t=4 von einer Ausgabeeinrichtung AUS des Serviceautomaten SA an den Spieler ausgegeben. Falls es sich dabei um einen Gutschein G handelt, besteht die Ausgabeeinrichtung AUS zweckmäßigerweise aus einem Drucker, der den Gutschein G druckt.

Ebenso ist es möglich, daß der Gegenwert aus einer geldwerten, monetären Gutschrift auf ein Konto des Spielers besteht, initiiert als Zahlungstransaktion des Zahlungsverkehrsterminals ZVT. Hierbei besteht die Möglichkeit, daß die Zahlungsinformation über die Nahbereichskommunikationseinrichtungen NFC oder eine andere Datenübertragungsverbindung - z.B. GSM, UMTS, WAP, Infrarot, Bluetooth, etc. - auf ein elektronisches Konto KTO der Spielkonsole SK übertragen und dort verbucht wird. Das elektronische Konto KTO kann beispielsweise durch eine SIM-Karte realisiert werden, so daß die Gutschrift auf dem Mobilfunkkonto des Spielers verbucht wird, oder es ist möglich eine Chipkarte oder Kreditkarte als Kontoeinrichtung KTO in die Spielkonsole einzuführen. Alternativ ist es auch möglich, daß die Gutschrift von dem Zahlungsverkehrsterminal ZVT direkt über eine adäquate Datenleitung (z.B. als Kabel- oder Mobilfunkverbindung) an ein Finanzinstitut FI als kontoführende Stelle des Spielers übertragen und dort gutgeschrieben wird.

In dem in Figur 1 dargestellten Beispiel entscheidet sich der Spieler im Schritt t=4 für das Gegenwert-Spielprogramm GSP als Gegenwert für seine Werteinheiten WE. Das Gegenwert-Spielprogramm GSP ist ebenso wie das Spielprogramm SP von dem Prozessor CPU ausführbar, so daß der Spieler mit dem Gegenwert-Spielprogramm GSP weitere Spielergebnisse RES erzielen kann. Das Gegenwert-Spielprogramm GSP muss nicht notwendigerweise aus einem vollständigen Spielprogramm bestehen, sondern kann auch eine Erweiterung oder Variante des auf der Spielkonsole SK bereits vorhandenen Spielprogramms SP repräsentieren.

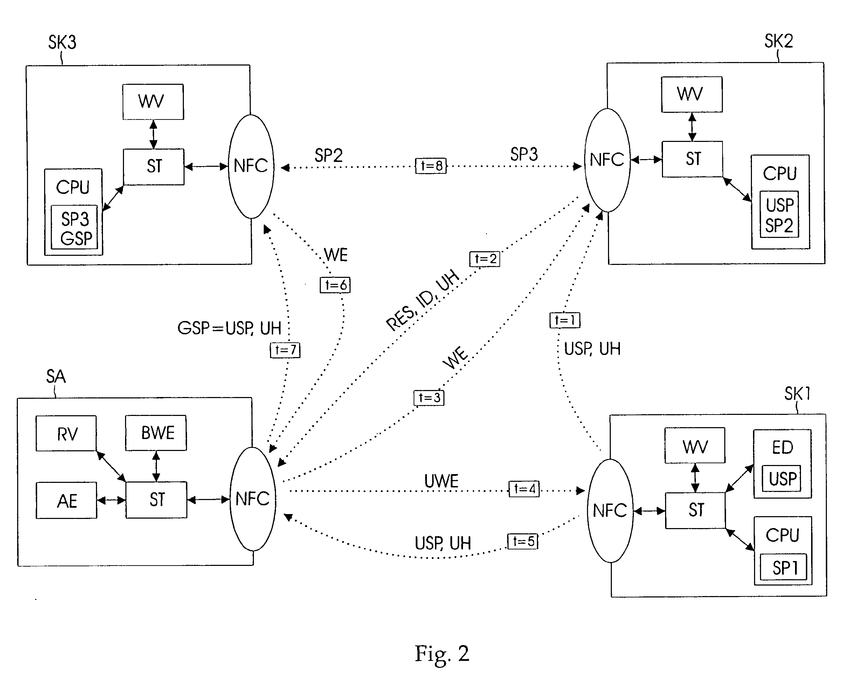

Auf der Basis der in Figur 1 erläuterten Datentransaktionen zwischen dem Serviceautomaten SA und der Spielkonsole SK zeigt Figur 2 eine Ausführungsform, bei der verschiedene Spielkonsolen SK1, SK2, SK3 direkt oder mittelbar über den Serviceautomaten SA interagieren.

Bei der in Figur 2 dargestellten Ausführungsvariante der vorliegenden Erfindung umfaßt die Spielkonsole SK1 neben den anhand der Spielkonsole SK der Figur 1 erläuterten Komponenten zusätzlich einen Spieleditor ED. Die für diese Ausführungsvariante irrelevanten Komponenten, sowohl der Spielkonsolen SK1, SK2, SK3 als auch des Serviceautomaten SA, sind in Figur 2 nicht abgebildet, zur vollen Funktionstüchtigkeit der Gerät sind sie gleichwohl notwendig. Die verschiedenen Interaktionen zwischen dem Serviceautomaten SA und den Spielkonsolen SK1, SK2, SK3 werden im folgenden anhand von acht Schritten t=1 bis t=8 erläutert.

Mit dem Spieleditor ED kann ein Spieler ein auf der Spielkonsole SK1 vorhandenes Spielprogramm SP1 erweitern oder variieren bzw. ein gänzlich neues Spielprogramm USP entwerfen. Ein auf der Spielkonsole SK1 erzeugtes Spielprogramm USP wird in Schritt t=1 auf die Spielkonsole SK2 zur dortigen Ausführung durch den entsprechenden Prozessor CPU übertragen.

Da es sich bei dem Entwurf eines neuen Spielprogramms um eine kreative Leistung eines Spielers handelt, ist es zweckmäßig, ein entworfenes und zu versendendes Spielprogramm mit einem Urheberhinweis UH so zu versehen, so daß das entsprechende Urheber-Spielprogramm USP nicht ohne den Urheberhinweis UH weiterverbreitet bzw. nicht ohne dessen Beachtung ausgeführt werden kann.

Bei dem Urheberhinweis UH handelt es sich zweckmäßigerweise um eine eindeutige Kennung der Spielkonsole SK1, möglicherweise in Verbindung mit dem Klarnamen ID des Entwicklers des Urheber-Spielprogramms USP. Ein weitere Spieler, der das Urheberspielprogramm USP mit seiner Spielkonsols SK2 von der Spielkonsole SK1 empfangen hat, kann es durch Ausführung auf dem Prozessor CPU der Spielkonsole SK2 nutzen und damit seinerseits ein Spielergebnis RES erzielen. Ein auf der Spielkonsole SK2 vorhandenes Spielprogramm SP2 kann daneben weiterhin genutzt werden.

Das mit dem Urheber-Spielprogramm USP erzielte Spielergebnis RES wird in Schritt t=2 von der Spielkonsole SK2 auf den Serviceautomaten SA automatisch übertragen, sobald sich die Spielkonsole SK2 im Nahbereich des Serviceautomaten SA befindet. Zusammen mit dem Spielergebnis RES wird der Klarname ID des Spielers, der auf der Spielkonsole SK2 das Spielergebnis RES mit dem Urheber-Spielprogramm USP erzielt hat sowie der Urheberhinweis UH auf den Urheber, der das Urheber-Spielprogramm USP auf der Spielkonsole SK1 entwickelt hat versandt.

Der Serviceautomat SA empfängt also das Spielergebnis RES zusammen mit einem Hinweis ID auf den Spieler und einen Hinweis UH auf den Urheber. Dementsprechend wird von der Bewertungseinrichtung BEW eine dem Spielergebnis RES entsprechende Anzahl von Werteinheiten WE, UWE für den über den Klarnamen ID bekannten Spieler, sowie für den über den Urheberhinweis UH bekannten Urheber ermittelt.

Die Werteinheiten WE für den Spieler der Spielkonsole SK2 können im Schritt t=3 direkt im Anschluß an den Empfang des Spielergebnisses RES von dem Serviceautomaten SA an die Spielkonsole SK2 übertragen werden. Die Urheber-Werteinheiten UWE für den Urheber des Urheber-Spielprogramms USP können in Schritt t=4 jedoch erst dann an die Spielkonsole SK1 übertragen werden, wenn diese das nächste Mal in den Nahbereich des Serviceautomaten SA eingebracht wird. Dabei kann es in bestimmten Situationen jedoch auch vorkommen, daß die Schritte t=3 und t=4 parallel durchgeführt werden, oder das der Schritt t=4 vor dem Schritt t=3 ausgeführt wird.

Bei einer vorteilhaften Ausgestaltung ist es zusätzlich möglich, daß Werteinheiten WE auch für Einkäufe von Waren und/ oder Dienstleitungen ausgegeben werden, beispielsweise in einer mit einem erfindungsgemäßen Serviceautomaten SA ausgestatteten Verkaufsniederlassung. Die Einkaufsumsätze werden dazu an den Serviceautomaten SA - z.B. automatisch von einem Kassensystem - transferiert, wo die Bewertungseinrichtung BWE die entspreche Anzahl von Werteinheiten ermittelt. Die Werteinheiten werden dann auf die Spielkonsole des Kunden übertragen, sobald er diese das nächste Mal in den Nahbereich des Serviceautomaten SA einbringt.

Das Spielergebnis RES wird auf dem Serviceautomaten SA von der Ergebnisverwaltung RV in den entsprechenden Ranglisten, evtl. getrennt nach Spielern und Urhebern, protokolliert. Diese Ranglisten werden zusätzlich von der Anzeigeeinrichtung AE des Serviceautomaten SA angezeigt. Falls die Ergebnisverwaltung RV feststellt, daß die Urheber-Spielprogramme USP eines bestimmten Urhebers besonders beliebt bei anderen Spielern sind, kann die Bewertungseinrichtung BWE diesen Urheber für den Erfolg seiner Spielprogramme mit weiteren Werteinheiten UWE belohnen.

Darüber hinaus ist es vorteilhaft, daß ein Urheber-Spielprogramm USP, das von der Ergebnisverwaltung RV als besonders erfolgreich ermittelt wird, von der Spielkonsole SK1 des Urhebers auf den Serviceautomaten SA zur weiteren Verbreitung durch den Serviceautomaten SA übertragen wird.

In dem Beispiel der Figur 2 handelt es sich bei dem Urheber-Spielprogramm USP um ein solches von der Ergebnisverwaltung EV ermitteltes, besonders erfolgreiches Urheber-Spielprogramm. Deshalb wird die Spielkonsole SK1 beim nächsten Eintreten in den Nahbereich des Serviceautomaten SA durch ein spezielles Anfragesignal aufgefordert, das entsprechende Urheber-Spielprogramm USP zusammen mit einem Urheberhinweis UH in Schritt t=5 an den Serviceautomaten SA zu übertragen. Ein derartiges Anfragesignal wird beispielsweise von der Steuereinrichtung ST der Spielkonsole SK1 verarbeitet, die dann adäquat mit dem Übertragen des angeforderten Urheber-Spielprogramms USP reagiert. Alternativ ist es auch möglich, daß die Übertragung des Urheber-Spielprogramms USP von der Spielkonsole SK1 initiiert wird und es keiner Aufforderung des Serviceautomaten SA bedarf.

Das besonders erfolgreiche Urheber-Spielprogramm USP kann von dem Serviceautomaten SA als Gegenwert für eine entsprechende Anzahl von einzutauschenden Werteinheiten WE verwendet werden. Eine solche Situation illustrieren die Interaktionen der Schritte t=6 und t=7 zwischen dem Serviceautomaten SA und der Spielkonsole SK3.

Die Spielkonsole SK3 tauscht in Schritt t=6 eine bestimmte Anzahl von Werteinheiten WE bei dem Serviceautomaten SA gegen ein Gegenwert-Spielprogramm GSP ein. Der Serviceautomat SA überträgt daraufhin in Schritt t=7 das von der Spielkonsole SK1 erhaltenen Urheber-Spielprogramm USP als Gegenwertspielprogramm GSP an die Spielkonsole SK3. Hier kann die Spielkonsole SK3 das Urheber-Spielprogramm USP ausführen und der Spieler der Spielkonsole SK3 kann mit ihm weitere Spielergebnisse erzielen. Auch diese werden nach Übertragung an den Serviceautomaten SA mit entsprechenden Werteinheiten WE für den Spieler und Urheber-Werteinheiten UWE für den Urheber vergütet.

Neben dem einseitigen Übertragen von Spielprogrammen USP von einer Spielkonsole SK1 auf eine andere Spielkonsole SK2, ist weiterhin ein Tausch von Spielprogrammen vorgesehen. Dies illustriert der Schritt t=8, indem die Spielkonsole SK3 ihr Spielprogramm SP3 an die Spielkonsole SK2 überträgt und diese (gleichzeitig) im Ausgleich das Spielprogramm SP2 an die Spielkonsole SK3 überträgt. Ein derartiger Tausch ist insbesondere bei einem Spielprogramm sinnvoll, das eine Spielkonsole im Austausch gegen Werteinheiten WE von dem Serviceautomaten SA als Gegenwert-Spielprogramm GSP empfangen hat und das insofern einen gewissen Wert darstellen. Ebenso ist ein Tausch von Spielergebnissen RES z.B. in Form von gelösten Rätselschritten oder lokalen Ranglisten (Highscores) möglich.

Als Variante eines solchen Spielprogramm-Tauschs kann ein "materieller" Tauschhandel realisiert werden, indem beispielsweise die von den Spielkonsolen SK2 und SK3 ausgetauschten Spielprogramme SP2 und SP3 nach der Transaktion von der jeweils übertragenden Spielkonsole gelöscht werden.

Selbstverständlich können alle anhand der Figuren 1 und 2 erläuterten Nahfeld-Datenübertragungen durch Techniken der Datenverschlüsselung, beispielsweise durchzuführen von Signatur- und/oder Verifikationseinrichtungen, vor Manipulation und Abhören geschützt werden.

## Patentansprüche

1. Elektronisches Bewertungsverfahren umfassend die Schritte:
Erzielen eines Spielergebnisses (RES) auf einer portablen, elektronischen Spielkonsole (SK; SK1, SK2, SK3) durch einen Spieler eines Spielprogramms (SP; SP1, SP2, SP3),
- Einbringen der Spielkonsole (SK; SK1, SK2, SK3) in einen Nahbereich (NB) eines lokalen Serviceautomaten (SA) eines Dienstleitungsanbieters,
- drahtloses Übertragen im Nahbereich (NB) des Spielergebnisses (RES) von der Spielkonsole (SK; SK1, SK2, SK3) auf den Serviceautomaten (SA), und
- automatisches Ermitteln von Werteinheiten (WE) in Abhängigkeit von dem Spielergebnis (SE) durch den Serviceautomaten (SA).

2. Verfahren nach Anspruch 1, **gekennzeichnet durch** den Schritt des Versehens des Spielergebnisses (RES) mit einer eindeutigen Signatur (SIG) **durch** die Spielkonsole (SK; SK1, SK2, SK3).

3. Verfahren nach Anspruch 2, **dadurch gekennzeichnet, daß** das Spielergebnis (RES) und/oder die Signatur (SIG) auf dem Serviceautomaten (SA) angezeigt wird.

4. Verfahren nach einem der Ansprüche 1 bis 3, **dadurch gekennzeichnet, daß** beim drahtlosen Übertragen im Nahbereich (NB) Daten verschlüsselt übertragen werden.

5. Verfahren nach einem der Ansprüche 1 bis 4, **gekennzeichnet durch** die Schritte:
- Erzeugen eines Urheber-Spielprogramms (USP) **durch** einen Urheber auf der Spielkonsole (SK1, SK2, SK3),
- Versehen des Urheber-Spielprogramms (USP) mit einem den Urheber identifizierenden Urheberhinweis (UH),
- Einbringen der Spielkonsole (SK1, SK2, SK3) in den Nahbereich einer weiteren Spielkonsole (SK1, SK2, SK3) oder den Nahbereich (NB) des Serviceautomaten (SA), und
- drahtloses Übertragen im Nahbereich des Urheber-Spielprogramms (USP) auf die weitere Spielkonsole (SK1, SK2, SK3) oder den Serviceautomaten (SA).

6. Verfahren nach Anspruch 5, **gekennzeichnet durch** die Schritte:
- Erzielen eines Spielergebnisses (SA) mit dem Urheber-Spielprogramm (USP) auf der weiteren Spielkonsole (SK1, SK2, SK3),
- Einbringen der weiteren Spielkonsole (SK1, SK2, SK3) in den Nahbereich (NB) des Serviceautomaten (SA),
- drahtloses Übertragen des Spielergebnisses (RES) und des Urheberhinweises (UH) des Urheber-Spielprogramms (USP) auf den Serviceautomaten (SA), und
- Ermitteln von Urheber-Werteinheiten (UWE) in Abhängigkeit von dem Spielergebnis (RES) für den Urheber des Urheber-Spielprogramms (USP) **durch** den Serviceautomaten (SA), sowie
- Einbringen der Spielkonsole (SK1, SK2, SK3) des Urhebers in den Nahbereich (NB) des Serviceautomaten (SA) und
- drahtloses Übertragen im Nahbereich (NB) der Urheber-Werteinheiten (UWE) von dem Serviceautomaten (SA) auf die Spielkonsole (SK1, SK2, SK3).

7. Verfahren nach einem der Ansprüche 1 bis 6, **gekennzeichnet durch** das automatische Bereitstellen eines den Werteinheiten (WE) zugeordneten Gegenwertes **durch** den Serviceautomaten (SA).

8. Verfahren nach einem der Ansprüche 1 bis 6, **gekennzeichnet durch** die folgenden Schritte:
- drahtloses Übertragen im Nahbereich (NB) der ermittelten Werteinheiten (WE) von dem Serviceautomaten (SA) an die Spielkonsole (SK; SK1, SK2, SK3),
- Verbuchen der Werteinheiten (WE) auf der Spielkonsole (SK; SK1, SK2, SK3),
- drahtloses Übertragen im Nahbereich (NB) einer einem Gegenwert entsprechenden Teilmenge von Werteinheiten (WE) der Menge der verbuchten Werteinheiten (WE) von der Spielkonsole (SK; SK1, SK2, SK3) auf den Serviceautomaten (SA), und
- automatisches Bereitstellen des der Teilmenge der Werteinheiten (WE) entsprechenden Gegenwertes **durch** den Serviceautomaten (SA).

9. Verfahren nach Anspruch 7 oder 8, **dadurch gekennzeichnet, daß** der Gegenwert ein Gegenstand (G), ein Gutschein (G) oder eine Gutschrift ist und der Schritt des Bereitstellens das automatische Ausgeben des Gegenstands (G) oder des Gutscheins (G) oder das Gutschreiben der Gutschrift umfaßt.

10. Verfahren nach Anspruch 8 oder 9, **dadurch gekennzeichnet, daß** der Gegenwert ein Spielprogramm (GSP) für die Spielkonsole (SK; SK1, SK2, SK3) ist und der Schritt des Bereitstellens das drahtlose Übertragen im Nahbereich (NB) dieses Gegenwert-Spielprogramms (GSP) von dem Serviceautomaten (SA) auf die Spielkonsole (SK; SK1, SK2, SK3) umfaßt.

11. Verfahren nach Anspruch 10 mit Anspruch 5 oder 6, **dadurch gekennzeichnet, daß** das Gegenwert-Spielprogramm (GSP) das an den Serviceautomaten (SA) übertragene Urheber-Spielprogramm (USP) ist.

12. Verfahren nach Anspruch 10 oder 11, **gekennzeichnet durch** die Schritte:
- Einbringen der Spielkonsole (SK; SK1, SK2, SK3) in den Nahbereich (NB) einer weiteren Spielkonsole (SK; SK1, SK2, SK3),
- drahtloses Übertragen des Gegenwert-Spielprogramms (GSP) von der Spielkonsole (SK; SK1, SK2, SK3) auf die weitere Spielkonsole (SK; SK1, SK2, SK3), wobei das Gegenwert-Spielprogramm (GSP) auf der Spielkonsole (SK; SK1, SK2, SK3) gelöscht wird, und
- drahtloses Übertragen eines anderen Gegenwert-Spielprogramms (GSP) von der weiteren Spielkonsole (SK; SK1, SK2, SK3) auf die Spielkonsole (SK; SK1, SK2, SK3), wobei das andere Gegenwert-Spielprogramm (GSP) auf der weiteren Spielkonsole (SK; SK1, SK2, SK3) gelöscht wird.

13. Verfahren nach einem der Ansprüche 5 oder 6 oder 10 bis 12, **dadurch gekennzeichnet, daß** das Urheber-Spielprogramm (USP) und/oder das Gegenwert-Spielprogramm (GSP) ein vollständiges Spielprogramm (SP; SP1, SP2, SP3) oder eine Spielstufe, ein Charakter oder eine Szene eines Spielprogramms (SP; SP1, SP2, SP3) ist.

14. Stationärer Serviceautomat (SA) eines Dienstleistungsanbieters, umfassend eine Nahbereichskommunikationseinrichtung (NFC) zum drahtlosen Nahbereichs-Empfang eines mit einem Spielprogramm (SP; SP1, SP2, SP3) erzielten Spielergebnisses (RES) von einer portablen, elektronischen Spielkonsole (SK; SK1, SK2, SK3) und eine Bewertungseinrichtung (BWE), welche zur Ermittlung von dem Spielergebnis (RES) entsprechenden Werteinheiten (WE) eingerichtet ist.

15. Serviceautomat (SA) nach Anspruch 14, **dadurch gekennzeichnet, daß** der Serviceautomat (SA) eine Verifikationseinrichtung (VE) zur automatischen Verifikation einer Signatur (SIG) des Spielergebnisses (RES) umfaßt.

16. Serviceautomat (SA) nach Anspruch 14 oder 15, **dadurch gekennzeichnet, daß** der Serviceautomat (SA) eine Bereitstellungseinrichtung zum Bereitstellen eines den Werteinheiten (WE) entsprechenden Gegenwertes umfaßt.

17. Serviceautomat (SA) nach Anspruch 14 oder 15, **dadurch gekennzeichnet, daß** die Nahbereichskommunikationseinrichtung (NFC) eingerichtet ist, die ermittelten Werteinheiten (WE) im Nahbereich (NB) drahtlos an die Spielkonsole (SK; SK1, SK2, SK3) zur dortigen Verbuchung zu übertragen und eine einem Gegenwert entsprechende Mindestmenge von Werteinheiten (WE) im Nahbereich (NB) drahtlos von der Spielkonsole (SK; SK1, SK2, SK3) zu empfangen, und daß der Serviceautomat (SA) eine Bereitstellungseinrichtung zum Bereitstellen des der empfangenen Mindestmenge von Werteinheiten (WE) entsprechenden Gegenwertes umfaßt.

18. Serviceautomat nach Anspruch 16 oder 17, **dadurch gekennzeichnet, daß** der Gegenwert ein Gegenstand (G), ein Gutschein (G) oder eine Gutschrift ist und daß die Bereitstellungseinrichtung eine Ausgabeeinrichtung (AUS) zum Ausgeben des Gegenstandes (G), ein Drucker zum Drucken des Gutscheins (G) oder ein Zahlungsverkehrsterminal (ZVT) zum Gutschreiben der Gutschrift ist.

19. Serviceautomat (SA) nach Anspruch 18, **dadurch gekennzeichnet, daß** das Zahlungsverkehrsterminal (ZVT) eingerichtet ist, die Gutschrift über die Nahbereichskommunikationseinrichtung (NFC) einem auf der Spielkonsole (SK; SK1, SK2, SK3) befindlichen elektronischen Konto (KTO) oder über eine sonstige Übertragungseinrichtung einem sonstigen Konto gutzuschreiben.

20. Serviceautomat (SA) nach Anspruch 16 oder 17, **dadurch gekennzeichnet, daß** der Gegenwert ein Spielprogramm (GSP) ist und die Bereitstellungseinrichtung durch die Nahbereichskommunikationseinrichtung (NFC) gebildet wird, welche zur drahtlosen Nahbereichs-Übertragung dieses Gegenwert-Spielprogramms (GSP) an die Spielkonsole (SK; SK1, SK2, SK3) eingerichtet ist.

21. Serviceautomat (SA) nach Anspruch 20, **dadurch gekennzeichnet, daß** die Nahbereichskommunikationseinrichtung (NFC) zum drahtlosen Nahbereichs-Empfang eines auf einer weiteren Spielkonsole (SK1, SK2, SK3) erzeugten Urheber-Spielprogramms (USP) eingerichtet ist, und das Gegenwert-Spielprogramm (GSP) ein solches Urheber-Spielprogramm (USP) ist.

22. Serviceautomat (SA) nach einem der Ansprüche 20 oder 21, **dadurch gekennzeichnet, daß** das Gegenwert-Spielprogramm (GSP) oder das Urheber-Spielprogramm (USP) ein vollständiges Spielprogramm (SP; SP1, SP2, SP3) oder eine Spielstufe, ein Charakter oder eine Szene eines Spielprogramms (SP; SP1, SP2, SP3) ist.

23. Serviceautomat nach Anspruch 14 bis 22, **dadurch gekennzeichnet, daß** das Spielergebnis (RES) einen Urheberhinweis (UH) auf einen Urheber des Spielprogramms (USP) besitzt, die Bewertungseinrichtung (BWE) zum Ermitteln von dem Spielergebnis (RES) entsprechenden Urheber-Werteinheiten (UWE) für diesen Urheber eingerichtet ist, und die Nahbereichskommunikationseinrichtung (NFC) zur drahtlosen Nahbereichs-Übertragung der ermittelten Urheber-Werteinheiten (UWE) an eine Spielkonsole (SK1, SK2, SK3) des Urhebers des Spielprogramms (USP) eingerichtet ist, sobald sich die Spielkonsole (SK1, SK2, SK3) des Urhebers im Nahbereich (NB) des Serviceautomaten (SA) befindet.

24. Serviceautomat nach einem der Ansprüche 14 bis 23, **dadurch gekennzeichnet, daß** der Serviceautomat (SA) eine Ergebnisverwaltung (RV) zur Verwaltung von Spielergebnissen (RES) und eine Anzeigeeinrichtung (AE) zum Anzeigen der verwalteten Spielergebnisse (RES) umfaßt.

25. Serviceautomat (SA) nach einem der Ansprüche 14 bis 24, **dadurch gekennzeichnet, daß** der Serviceautomat (SA) eine Sicherheitseinrichtung zum Verschlüsseln von zu versendenden Daten und zum Entschlüsseln von empfangenen Daten umfaßt.

26. Serviceautomat nach einem der Ansprüche 14 bis 25, **dadurch gekennzeichnet, daß** die Nahbereichskommunikationseinrichtung (NFC) eingerichtet ist, Daten drahtlos über NFC, W-LAN, Bluetooth, RFID oder eine Infrarot-Schnittstelle zu versenden und zu empfangen.

27. Portable elektronische Spielkonsole (SK; SK1, SK2, SK3), umfassend einen Prozessor (CPU) zur automatischen Ausführung eines Spielprogramms (SP; SP1, SP2, SP3), eine Bedieneinrichtung (BE) zur Bedienung des Spielprogramms (SP; SP1, SP2, SP3) durch einen Spieler und eine Nahbereichskommunikationseinrichtung (NFC) zur drahtlosen Nahbereichs-Übertragung von Daten an einen lokalen Serviceautomaten (SA), wobei die Spielkonsole (SK; SK1, SK2, SK3) eingerichtet ist, über die Nahbereichskommunikationseinrichtung (NFC) ein mit dem Spielprogramm (SP; SP1, SP2, SP3) erzieltes Spielergebnis (RES) an den Serviceautomaten (SA) zu übertragen.

28. Spielkonsole (SK; SK1, SK2, SK3) nach Anspruch 27, **dadurch gekennzeichnet, daß** die Spielkonsole (SK; SK1, SK2, SK3) eine Signatureinrichtung (SE) zur Signatur des Spielergebnisses (RES) mit einem Signaturschlüssel umfaßt.

29. Spielkonsole (SK; SK1, SK2, SK3) nach Anspruch 27 oder 28, **dadurch gekennzeichnet, daß** die Spielkonsole (SK; SK1, SK2, SK3) eine Werteinheitenverwaltung (WV) zum Verbuchen von Werteinheiten (WE) umfaßt und daß die Nahbereichskommunikationseinrichtung (NFC) zum drahtlosen Nahbereichs-Empfang von Werteinheiten (WE) von dem Serviceautomaten (SA) eingerichtet ist.

30. Spielkonsole (SK; SK1, SK2, SK3) nach Anspruch 29, **dadurch gekennzeichnet, daß** die Nahbereichskommunikationseinrichtung (NFC) zur drahtlosen Nahbereichs-Übertragung einer einem Gegenwert entsprechenden Teilmenge von Werteinheiten (WE) der Menge der verbuchten Werteinheiten (WE) an den Serviceautomaten (SA) eingerichtet ist.

31. Spielkonsole (SK; SK1, SK2, SK3) nach einem der Ansprüche 27 bis 30, **dadurch gekennzeichnet, daß** die Nahbereichskommunikationseinrichtung (NFC) zum drahtlosen Nahbereichs-Empfang eines Gegenwertes von dem Serviceautomaten (SA) eingereichtet ist.

32. Spielkonsole (SK; SK1, SK2, SK3) nach Anspruch 31, **dadurch gekennzeichnet, daß** der Gegenwert eine monetäre Gutschrift ist und die Spielkonsole (SK; SK1, SK2, SK3) ein elektronisches Konto (KTO) umfaßt, das eingerichtet ist, die monetäre Gutschrift zu verbuchen.

33. Spielkonsole (SK; SK1, SK2, SK3) nach Anspruch 31, **dadurch gekennzeichnet, daß** der Gegenwert ein Spielprogramm (GSP) ist und der Prozessor (CPU) zur Ausführung dieses Gegenwert-Spielprogramms (GSP) eingerichtet ist.

34. Spielkonsole (SK; SK1, SK2, SK3) nach Anspruch 33, **dadurch gekennzeichnet, daß** die Nahbereichskommunikationseinrichtung (NFC) zur drahtlosen Nahbereichs-Übertragung des Gegenwert-Spielprogramms (GSP) an eine weitere Spielkonsole (SK; SK1, SK2, SK3) und zum drahtlosen Nahbereichs-Empfang eines anderen Gegenwert-Spielprogramms (GSP) von der weiteren Spielkonsole (SK; SK1, SK2, SK3) eingerichtet ist, wobei auf den Spielkonsolen (SK; SK1, SK2, SK3) jeweils eine Einrichtung vorgesehen ist, die das zu übertragenen Gegenwert-Spielprogramm (GSP) nach seiner Übertragung auf der übertragenden Spielkonsole (SK; SK1, SK2, SK3) löscht.

35. Spielkonsole (SK1, SK2, SK3) nach einem der Ansprüche 27 bis 34, **dadurch gekennzeichnet, daß** die Spielkonsole (SK1, SK2, SK3) einen Spieleditor (ED) zur Erzeugung eines Spielprogramms (USP) umfaßt, wobei eine Einrichtung vorgesehen ist, mit der das so erzeugte Spielprogramm (USP) mit einem Hinweis (UH) auf den Urheber, der dieses Spielprogramm (USP) erzeugt hat, als ein Urheber-Spielprogramm (USP) kennzeichenbar ist.

36. Spielkonsole (SK1, SK2, SK3) nach Anspruch 35, **dadurch gekennzeichnet, daß** die Nahbereichskommunikationseinrichtung (NFC) zur drahtlosen Nahbereichs-Übertragung des Urheber-Spielprogramms (USP) an eine weitere Spielkonsole (SK1, SK2, SK3) und zum drahtlosen Nahbereichs-Empfang eines weiteren Urheber-Spielprogramms (USP) von der weiteren Spielkonsole (SK1, SK2, SK3) eingerichtet ist.

37. Spielkonsole (SK; SK1, SK2, SK3) nach Anspruch 27 bis 36, **dadurch gekennzeichnet, daß** die Spielkonsole (SK; SK1, SK2, SK3) eine Sicherheitseinrichtung zum Verschlüsseln von zu versendenden Daten und zum Entschlüsseln von empfangenen Daten umfaßt.

38. Spielkonsole (SK; SK1, SK2, SK3) nach einem der Ansprüche 27 bis 37, **dadurch gekennzeichnet, daß** die Nahbereichskommunikationseinrichtung (NFC) eingerichtet ist, Daten drahtlos über NFC, W-LAN, Bluetooth, RFID oder eine Infrarot-Schnittstelle zu versenden und zu empfangen.

39. System, bestehend aus einem Serviceautomaten (SA) nach einem der Ansprüche 15 bis 27 und einer Spielkonsole (SK; SK1, SK2, SK3) nach einem der Ansprüche 28 bis 38.
